# EUROPÄISCHE PATENTANMELDUNG

(11) **EP 1 231 158 A1**
(43) Veröffentlichungstag der Anmeldung: **14.08.2002**
(21) Anmeldenummer: 01103247.1
(22) Anmeldetag: 12.02.2001
(51) Int. Cl.: B65D 63/14, B65B 13/34, F16L 3/233

(54) **Magazinstreifen von Bandschlössern und Werkzeug für dessen Verarbeitung**

(71) Anmelder: Hellermann Tyton GmbH, 25436 Tornesch (DE)
(72) Erfinder: Kurmis, Viktor, 25421 Pinneberg (DE)
(74) Vertreter: Glawe, Delfs, Moll & Partner

(57) **Zusammenfassung**

Die Erfindung betrifft einen Gegenstand, insbesondere Kabelbaum, der mittels eines Bandes (18) gebunden ist, dessen Enden von einem Schloß (1) gehalten sind, das an zwei gegenüberliegenden Seiten (2) benachbart der Bandeintrittsseite des Schlosses (1) die abgeschnittenen Reste (17) eines Stegs aufweist, der in einem Schloßmagazinstreifen benachbarte Schlösser miteinander verbindet. Erfindungsgemäß hat jeder Stegrest eine Länge von nicht mehr als 0,6 mm und/oder als ein Zwölftel der in derselben Richtung gemessenen Abmessung des Schlosses sowie eine Breite von nicht mehr als der Hälfte der Schloßbreite. Zweckmäßigerweise ist die Breite des Stegrests geringer als die Breite des Bandes. Die Erfindung betrifft ferner einen Magazinstreifen sowie ein Werkzeug zum Verarbeiten der angegebenen Schlösser.

## Beschreibung

Für das maschinelle Binden von Gegenständen, insbesondere Kabelbäumen, mittels Bandschlaufen, deren Enden von Bandschlössern gehalten werden, führt man die Bandschlösser dem Bindewerkzeug in Form eines Magazinstreifens zu, in welchem die Bandschlösser durch flexible Stege miteinander verbunden sind, die jeweils vor Verwendung im Werkzeug geschnitten werden. Wenn man die Stege nur durch einen Schnitt durchtrennt (EP-B 297 337), bleiben vorstehende Reste übrig, die infolge des Schnitts scharfkantig sind und zu Verletzungsgefahr führen können (EP-B 297 337). Es ist daher auch bekannt, die Stege durch zwei an ihren Enden geführte Schnitte im wesentlichen vollständig zu entfernen. Dabei ergibt sich Abfall. Da in vielen Anwendungsfällen beispielsweise im Flugzeug- oder Satellitenbau, dieser Abfall nicht unkontrolliert an Ort und Stelle verbleiben darf, bereitet das Auffangen und Abführen des Abfalls Umstände.

Der Erfindung liegt die Aufgabe zugrunde, bei einem aus Bandschlössern bestehenden Magazinstreifen das Problem der Abfallbeseitigung zu vermeiden. Die Lösung besteht in den Merkmalen der Ansprüche 1, 3 und 9 und vorzugsweise denjenigen der Unteransprüche.

Die Lösung gelingt durch Zusammenführung von drei Merkmalen. Das erste Merkmal beschränkt die Länge der Stegereste an den Schlössern des gebundenen Gegenstands auf nicht mehr als 0,6 mm bzw. die Länge der mittig zu trennenden Stege im Magazinstreifen auf 1 mm. Diese Abmessungen können auch auf diejenigen des Schlosses bezogen werden; der Stegrest soll nicht länger als ein Zwölftel der Abmessung des Schlosses in derselben Richtung sein bzw. die gesamte Steglänge soll nicht größer als ein ein Achtel der Schloßabmessung sein. Das zweite Merkmale beschränkt die Breite des Stegs bzw. Stegrests auf maximal die Hälfte der Schloßbreite, wobei mittige Anordnung vorausgesetzt wird. Vorzugsweise ist die Breite der Stege auch geringer als die des Bandes. Dank diesem Merkmal treten die seitlichen Kanten des Stegrests zurück gegenüber der seitlichen Begrenzung des Schlosses und des Bandes. Das dritte Merkmal besteht darin, daß die Stege benachbart der Bandeintrittsseite des Schlosses angeordnet sind und demzufolge nahe dem gebundenen Gegenstand in einem geschützten Winkel liegen. Dieses letztere Merkmal ist zwar bekannt von dem eingangs genannten Stand der Technik, seine Bedeutung für die Ausschließung der Verletzungsgefahr wurde jedoch nicht erkannt.

Als Ergebnis der Erfindung ist festzustellen, daß der Stegrest klein und zurückgezogen in einem Bereich liegt, der im Gebrauch weniger wahrscheinlich von einer Hand erreicht wird. Die Verletzungsgefahr wird dadurch maßgeblich verringert.

Als Bandeintrittsseite wird im dem obigen Zusammenhang diejenige Seite des Schlosses bezeichnet, von der her die Enden der den Gegenstand umschließenden Bandschlaufe in das Schloß eintreten. Diese Seite ist durch die Anordnung der Sperrorgane im Schloß vorbestimmt.

Vorzugsweise sind die Stege an einem Wulst angeordnet, der von jedem Schloß in Richtung zum benachbarten Schloß vorragt und der gegenüber dem Steg verdickt ist. Lediglich die dünnen, scharfen Stegreste, nicht aber der Wulst birgt Verletzungsgefahr. Durch die Verwendung des Wulstes kann die Länge des verbleibenden Stegrests verringert werden, ohne daß der Abstand zwischen zwei benachbarten Schlössern verringert wird. Letzteres ist deshalb wichtig, weil in der Herstellungsform die Wand zwischen zwei je ein Schloß bildenden Formnestern eine gewisse Mindestdicke haben muß.

Zweckmäßigerweise ist der Verbindungssteg mit den benachbarten Schlössern einstückig verbunden durch gemeinsame heißplastische Formgebung. Wenn dies nicht möglich ist, sollte der Steg mit einem der beiden Schlösser einstückig und mit dem anderen formschlüssig verbunden sein, wobei zweckmäßigerweise der Formschluß dadurch zustande kommt, daß der Steg eine Endverdickung aufweist, die von dem Material eines Schlosses aus dem heißplastischen Zustand heraus umschlossen ist.

Um die Steglänge kurz halten zu können, ist es offensichtlich zweckmäßig, den Abstand zwischen zwei Schlössern und also auch die Dicke der Formwand zwischen zwei je ein Schloß bildenden Formnestern gering zu halten. Diese Dicke kann erfindungsgemäß dadurch weiter verringert werden, daß die im wesentlichen parallelen Flächenanteile der Schlösser, zwischen denen der Steg angeordnet ist, schmaler als die Schlösser sind und seitlich von diesen Flächenanteilen Schrägflächen angeordnet sind, die zu den parallel zur Streifenrichtung verlaufenden Flächenanteilen führen.

Die angestrebte Kürze der Stegreste hängt bei einer praktisch vorgegebenen Mindestlänge der Stege davon ab, daß diese mittig geschnitten werden. Dies verlangt genaue Positionierung des zu schneidenden Stegs im Verarbeitungswerkzeug. Eine Positionierung der Schlösser im Verarbeitungswerkzeug findet normalerweise erst bei der Schloßhalterung statt, die das vorderste Schloß der Schloßkette zur Verarbeitung aufnimmt. Deshalb ist bei bekannten Werkzeugen zur Verarbeitung von Schloßketten vorgesehen, daß der Schnitt nahe der Schloßhalterung stattfindet. Dies ist aber unzweckmäßig, weil sich dort ohnehin viele Bauteile drängen. Man ist deshalb bestrebt, die Einrichtung zum Trennen der Schlösser in größerem Abstand von der Schloßhalterung vorzusehen. Dort ist aber die Positionierung der Schlösser, die sich an das genau positionierte Schloß in der Schloßhalterung anschließen, nicht so genau, daß ein exakt mittiger Schnitt eines sehr kurz bemessenen Stegs erwartet werden kann. Dieses Problem löst die Erfindung dadurch, daß die Trenneinrichtung an einem in Vorschubrichtung der Schlösser beweglichen Trägerteil angeordnet ist, der außerdem eine Positioniereinrichtung für den Magazinstreifen trägt. Dieser kann von dem ohnehin für den Vorschub der Magazinkette vorzusehenden Mitnehmer gebildet sein.

Die Erfindung wird im folgenden näher unter Bezugnahme auf die Zeichnung erläutert, die ein vorteilhaftes Ausführungsbeispiel veranschaulicht. Es zeigen:
- Fig. 1: einen Längsschnitt durch drei Schlösser eines Magazinbands,
- Fig. 2: eine der Fig. 1 entsprechende Draufsicht in Pfeilrichtung "II",
- Fig. 3: die teilweise geschnittene Ansicht eines Schlosses im gebundenen Zustand,
- Fig. 4: eine Draufsicht auf die Anordnung gemäß Fig. 3 in Pfeilrichtung "IV".
- Fig. 5 bis 7: drei schematische Schnitte durch ein Werkzeug in verschiedenen Funktionsstadien und
- Fig. 8: eine Ansicht der Sperrklinkenanordnung.

Jedes der Schlösser, die in der Darstellung stark vergrößert sind, umfaßt eine umlaufende Wand, die aus zur Streifenrichtung parallelen Wandabschnitten 1, zur Streifenrichtung senkrecht verlaufenden Wandabschnitten 2 und schräg verlaufenden Übergangsabschnitten 3 zusammengesetzt ist. Sie enthält eine Durchgangsöffnung 4 für die zu bindenden Bänder und Sperrklinken 5, die mit einer Zahnung dieser Bänder zusammenwirken. Die Sperrklinken 5 sind so angeordnet, daß sie die gezahnten Bänder in Pfeilrichtung "6" in das Schloß eintreten lassen, in der Gegenrichtung aber sperren. Die Seite 7 der Schlösser wird daher als Bandeintrittsseite bezeichnet.

Benachbarte Schlösser des Magazinstreifens sind durch Stege 10 miteinander verbunden. Diese sind in der Mehrzahl einstükkig mit beiden benachbarten Schlössern ausgeführt. Je nach Art der Herstellung können sie aber auch formschlüssig mit wenigstens einem der beiden Schlösser verbunden sein. Dies ist dargestellt bei dem Steg 10a, dessen verdickter, hinterschnittener Kopf 11 von dem Wandmaterial 12 des zugehörigen Schlosses umschlossen ist. Die Umschließung kommt dadurch zustande, daß das Ende des Stegs 10a vor der heißplastischen Formung des Schlosses in dessen Form eingelegt wurde und daher von dem Material 12 umströmt wurde, bevor es erstarrte.

Der Abstand der Wände 2 in ihrem vom Steg 10 verbundenen Bereich beträgt zweckmäßigerweise 0,6 bis 1 mm. Die Fußbereiche 13 der Stege 10 sind gegenüber den Mittelbereichen 14 der Stege wulstartig verdickt ausgeführt. Dies verbessert zum einen den Kraftübergang zwischen den Wandabschnitten 2 und den Stegen 10 und vermindert auch die nach dem Schnitt übrigbleibende Länge des dünnen, verletzungsgefährlichen Stegrests. Die Länge des dünnen Stegteils zwischen den Wulsten 13 ist zweckmäßigerweise nicht größer als 0,8 mm, weiter zweckmäßigerweise nicht größer als 0,6 mm. Die Länge des verbleibenden Stegrests soll nicht größer als 0,6 mm und/oder ein Zehntel (vorzugsweise ein Zwölftel) der Schloßlänge sein. Die Stege 10 haben im dargestellten Beispiel eine Länge, die etwa einem Fünfzehntel der Länge der Schlösser, gemessen in Streifenrichtung, entspricht.

Die Dicke des Stegs richtet sich nach der geforderten Flexibilität und Festigkeit und beträgt beispielsweise 0,2 bis 0,4 mm.

Die Breite des Stegs ist beträchtlich geringer als die Breite der Schlösser. Sie ist nicht größer als etwa die halte Breite der Schlösser und nicht größer als die Breite des Bandes. Gegenüber der Schloßkantenlinie 15 sind daher die Seitenkanten 8 der Stege 10 um eine Strecke 16 zurückgesetzt, die in der Größenordnung von 2 mm liegen sollte und wenigstens ein Achtel, vorzugsweise wenigstens ein Fünftel, der Schloßbreite betragen sollte.

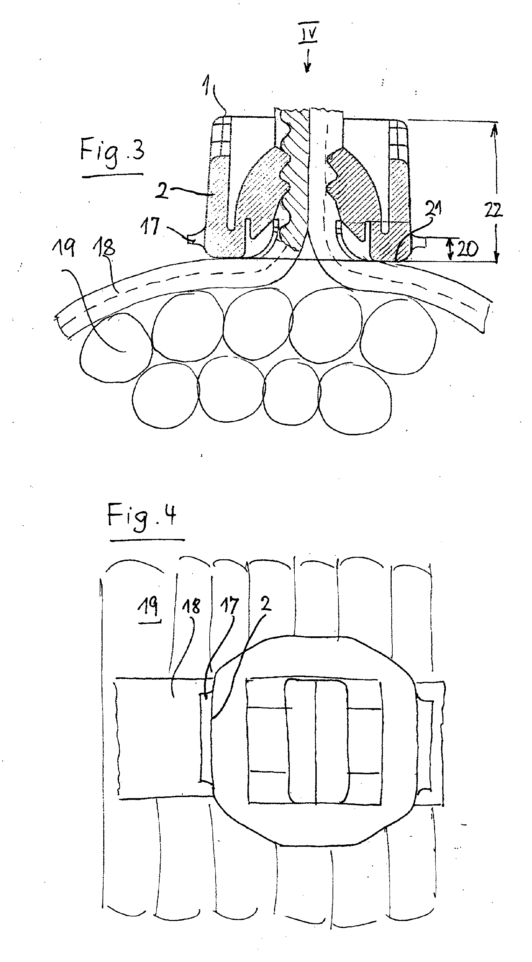

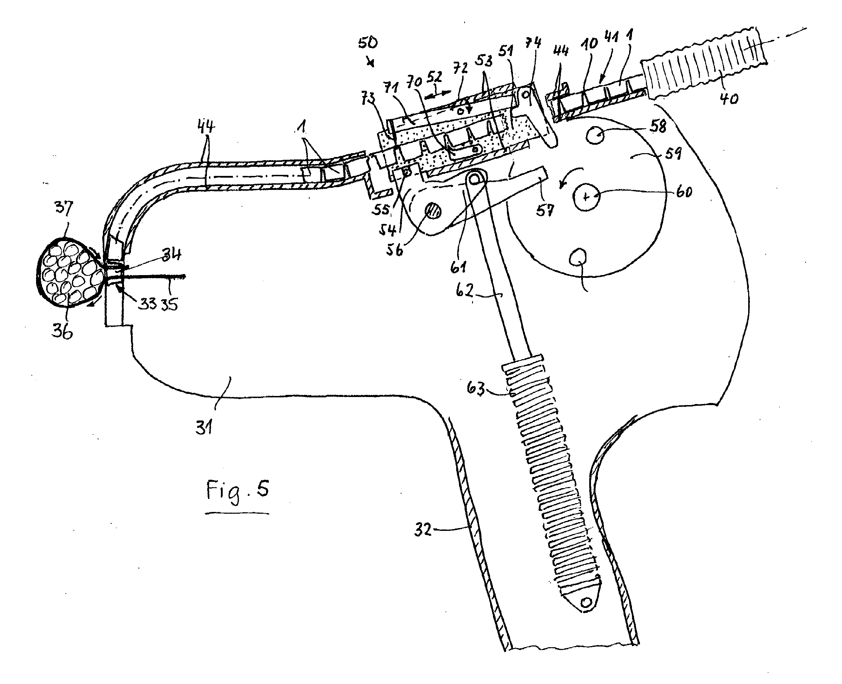

Bei der Verarbeitung der Schlösser werden diese durch einen Schnitt etwa in der Mitte des Stegs vereinzelt. Es bleiben Stegreste 17 stehen, deren Lage im Verhältnis zum Schloß, zur Bandschlaufe 18 und zum gebundenen Gegenstand 19 in Fig. 3 und 4 veranschaulicht ist. Man erkennt in Fig. 3, daß der Stegrest 17 in der Tiefe des Raumzwickels liegt, der von dem benachbarten Wandabschnitt 2 des Schlosses und der Bandschlaufe 18 bzw. dem Gegenstand 19 gebildet ist. Die Wahrscheinlichkeit, daß eine Person an dieser Stelle versehentlich derart entlangstreift, daß die dadurch verletzt werden könnte, ist angesichts der geringen Höhe des Stegrests und seiner geschützten Lage höchst unwahrscheinlich.

Der geringe Abstand der Schlösser im Magazinstreifen voneinander, der die geringe Länge der Stege ermöglicht, verlangt eine geringe Wanddicke der Form zwischen den einander gegenüberstehenden Wandabschnitten 2 benachbarter Schlösser. Wenn diese geringe Wanddicke über die gesamte Breite der Schlösser vorgesehen werden müßte, könnte dies problematisch sein. Jedoch ist es unbedenklich, weil die Breite der Wandabschnitte 2 und damit die Breite der genannten Formwand wesentlich geringer ist als die gesamte Breite der Schlösser. Zwischen den schräg verlaufenden Wandabschnitten 3 benachbarter Schlösser kann die Formwand reichlich dimensioniert werden.

Der Breitenbereich der Wandabschnitte 2, in welchem diese parallel zueinander verlaufen, sollte nicht größer als zwei Drittel der Gesamtbreite der Schlösser (gemessen quer zur Streifenrichtung) sein.

Der Abstand 20 aller Kanten des Stegrests 17 von der benachbarten Kante 21, über die das Band 18 im gebundenen Zustand abläuft, sollte (gemessen parallel zum Wandabschnitt 2) nicht größer als 2 mm, vorzugsweise nicht größer als 1,2 mm, sein. Im dargestellten Beispiel ist dieses Maß etwa 0,9 mm. Ausgedrückt in Bruchteilen der Schloßhöhe 22 sollte dieses Maß ein Viertel, vorzugsweise ein Fünftel, nicht überschreiten.

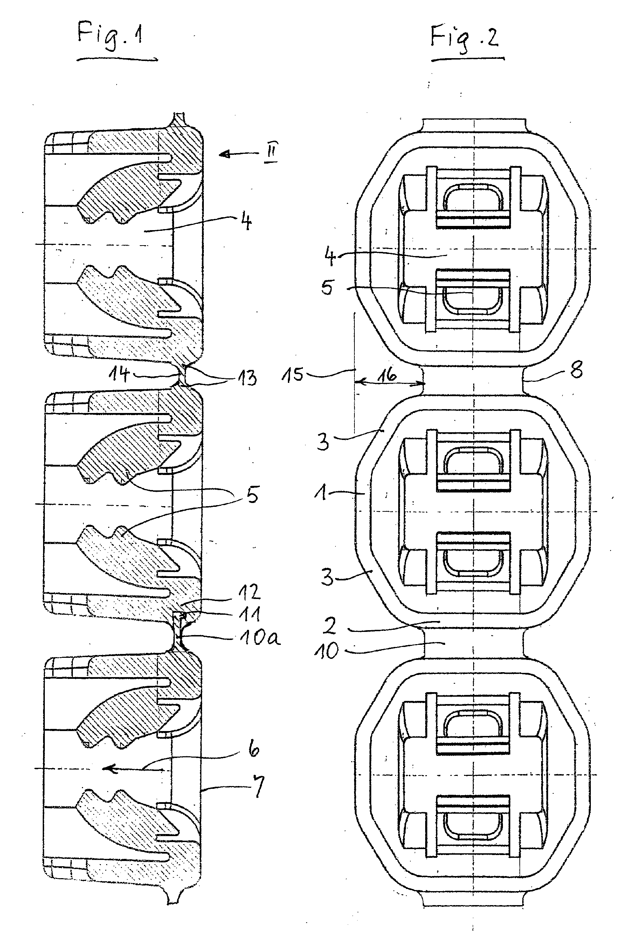

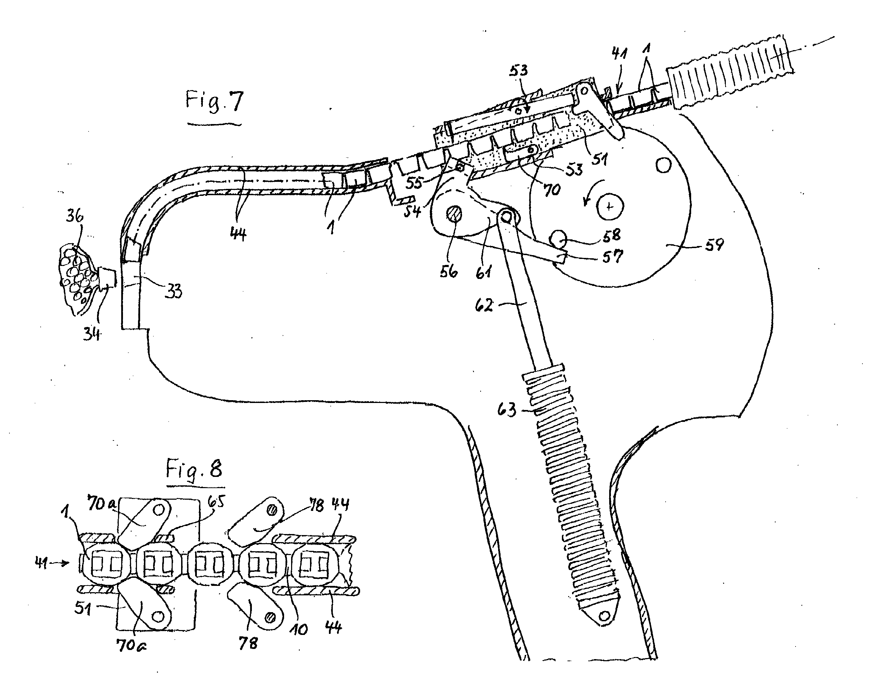

Im folgenden wird das Verarbeitungswerkzeug anhand der Fig. 1 bis 8 erläutert. Der Werkzeugkörper 31 mit einem Griff 32 weist an seiner Stirnseite eine nicht näher dargestellte Halterung 33 für ein Schloß 34 auf, durch das mit im vorliegenden Zusammenhang uninteressanten Mitteln ein Band 35 in Richtung der Pfeile hindurchgeführt wird, um einen zu bindenden Gegenstand 36 in Form einer Schlaufe 37 geschlungen und mit seinem freien Ende in das Schloß 34 zurückgeführt wird. Danach wird das Band gespannt, der überstehende Strang 35 abgeschnitten und das Schloß 34 aus der Schloßhalterung 33 entlassen (Fig. 7).

Um einen weitgehend automatischen Betrieb zu ermöglichen, werden die zu verarbeitenden Schlösser der Schloßhalterung 33 selbsttätig zugeführt. Von einem nicht dargestellten, stationären Großmagazin gelangen sie in Form einer Schloßkette 41, in der die einzelnen Schlösser 1 durch Stege 10 miteinander verbunden sind, zum Werkzeugkörper 31. Dort wird die Schloßkette 41 von einem Führungskanal 44 aufgenommen, der bei der Schloßhalterung 33 mündet.

An dem Führungskanal 44 ist eine Einrichtung 50 zum Vorschieben und Vereinzeln der Schlösser vorgesehen. Die Darstellung des Führungskanals 44 ist im Bereich dieser Einrichtung 50 unterbrochen. Es versteht sich aber, daß auch in diesem Bereich eine Führung für die Schloßkette 41 vorgesehen ist. Parallel zu dieser Schloßführung ist ein Schlitten 51, der in der Zeichnung durch Punktierung verdeutlicht ist, in Pfeilrichtung 52 parallel zur Schloßführung beweglich gelagert. Zwei Führungswände 53 deuten die Schlittenführung schematisch an. Zum Antrieb des Schlittens ist ein Hebelarm 54 vorgesehen, der bei 55 in geeigneter Weise mit dem Schlitten 51 zusammenwirkt und um eine am Werkzeugkörper 31 feste Achse 56 schwenkbar ist. Er ist starr verbunden mit einem Nockenhebel 57, der in die Umlaufbahn von zwei Nocken 58 ragt, die an einer Nockenscheibe 59 angeordnet sind, die von einem Elektromotor um die Achse 60 im Gegenuhrzeigersinn drehend angetrieben ist.

Mit den Hebelarmen 54, 57 ist ein dritter Hebelarm 61 starr verbunden, dessen Ende an die Druckstange 62 einer Druckfeder 63 angelenkt ist. Die Feder 63 drückt den Hebelarm 61 (in der Darstellung) nach oben und dadurch das Ende des Hebelarms 54 in Richtung zur Werkzeugstirn. Kommt hingegen ein Nocken 58 in Eingriff mit dem Nockenhebel 57, wie dies in Fig. 7 dargestellt ist, wird der Nockenhebel 57 nach unten gedrückt. Gleichzeitig wird auch der Hebelarm 61 nach unten bewegt, wodurch die Feder 63 gespannt wird. Der Hebelarm 54 und mit ihm der Schlitten 51 werden (in der Zeichnung) nach rechts bewegt, also entgegen der Vorschubrichtung der Schloßkette 41.

Wenn der Nocken 58 den Nockenhebel 57 passiert hat, versucht die Feder 63, die Hebelanordnung 54, 57, 61 im Gegenuhrzeigersinn zu schwenken und dadurch den Schlitten 51 in Vorschubrichtung zu bewegen.

Am Schlitten 51 ist eine Sperrklinke 70 angelenkt. Sie ist so ausgebildet und angeordnet, daß ihre Spitze durch eine nicht gezeigte Feder in Eingriff mit der Schloßkette 41 gedrängt wird. Allgemeiner gesprochen, weist die Klinke 70 eine Fläche auf, die mit einer nach hinten gewendeten Fläche eines Schlosses in Eingriff gelangen kann, um eine Vorschubkraft darauf auszuüben.

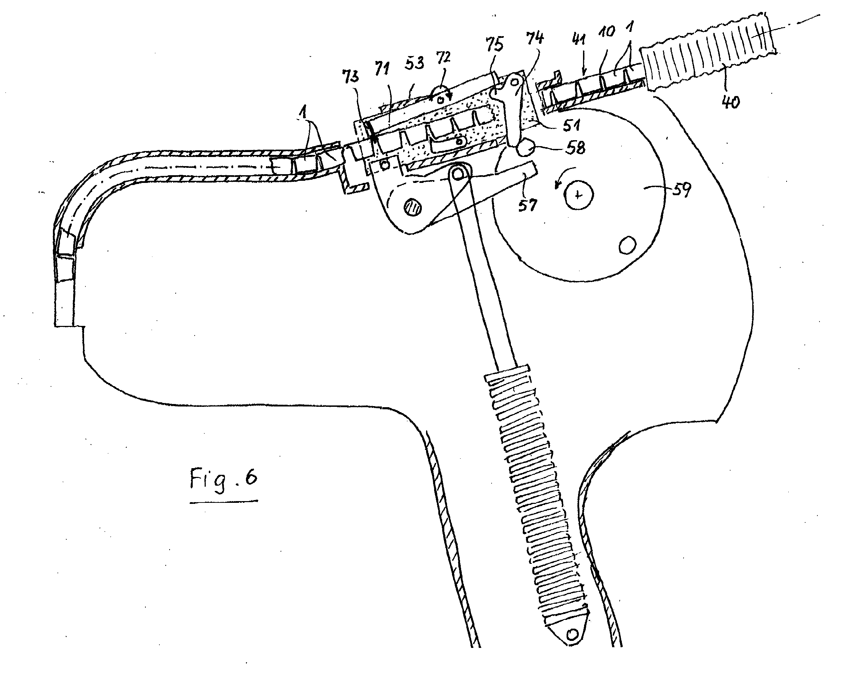

Ferner ist an dem Schlitten 51 eine Wippe 71 angelenkt, die durch eine nicht dargestellte Feder in Pfeilrichtung 72 beaufschlagt ist. Sie trägt an ihrem vorderen Ende eine Klinge 73, die dazu bestimmt ist, bei einer Bewegung entgegen der Pfeilrichtung 72 einen Steg 10 zwischen aufeinanderfolgenden Schlössern 1 zu durchtrennen. Um diese Schneidbewegung der Wippe 71 zu veranlassen, ist ein Nockenhebel 74 vorgesehen, der mit einer Nase 75 das hintere Ende der Wippe 71 erfaßt. Sein unteres Ende ragt in die Umlaufbahn der Drehnocken 58. Wird es gemäß Fig. 6 von einem Drehnocken erfaßt, so wird der Schwenkhebel 74 im Uhrzeigersinn und die Wippe 71 entgegen der Pfeilrichtung 72 verschwenkt. Die Klinge 73 führt dabei den Schnitt aus. In der dargestellten Ausführung ist der Nokkenhebel 44 am Schlitten angelenkt. Er kann statt dessen auch am Werkzeugkörper angebracht werden, sofern sein Zusammenwirken mit der Wippe gewährleistet ist.

Die Klinke 70 ist so ausgebildet, daß sie stets in gleicher Weise mit den Schlössern 1 zusammenwirkt. Das jeweils von der Klinke 70 erfaßte Schloß befindet sich daher in genau definierter Position im Verhältnis zur Klinke. Da die Klinke 70 und die Klinge 73 in festem gegenseitigen Abstand an dem Schlitten 51 angeordnet sind und da die Schlösser stets gleiche Gestalt und gleichen Abstand voneinander haben, ist Gewähr dafür gegeben, daß die Klinge 73 den Steg 10 zwischen zwei aufeinanderfolgenden Schlössern 1 stets genau mittig trifft. Diese Gewähr wäre nicht gegeben, wenn die Schneideinrichtung gehäusefest am Werkzeugkörper angeordnet wäre. Denn die jeweilige Stellung des Schlittens im Verhältnis zum Werkzeugkörper ist unbestimmt, wie aus der späteren Darstellung der Arbeitsweise hervorgeht.

Da die Darstellung in Fig. 5 bis 7 sehr schematisch ist, ist in Fig. 8 dargestellt, wie die praktische Ausführung des Sperrmechanismus zweckmäßigerweise gestaltet ist. Der Schlitten 51 ist beiderseits der Schloßkette 41 angeordnet und bildet Führungen 65 für diese. Die Darstellung der Schneideinrichtung ist weggelassen. Beiderseits der Schloßkette 41 trägt er je eine Sperrklinke 70a, die durch eine nicht gezeigte Feder von der Seite her in den zweckmäßigerweise keilförmig gestalteten Zwischenraum zwischen zwei Schlössern 1 gedrückt wird. Dadurch wird eine eindeutige Positionierung der Schlösser gegenüber dem Schlitten 51 erreicht. Fest am Werkzeuggehäuse ist ein weiteres Paar von Sperrklinken 78 angeordnet, die gleichfalls durch Federkraft gegen die Schlösser gedrückt sind und dafür sorgen, daß beim Rücklauf des Schlittens 51 (in Fig. 8 nach rechts) die Schloßkette festgehalten wird.

Im Zustand der Fig. 5 findet das Binden des Gegenstands 36 mittels der Schlaufe 37 statt. In diesem Zustand übt die Feder 63 über die Hebelanordnung 61, 54 eine Vorschubkraft auf den Schlitten 51 aus, die über die Sperrklinke 70 auf die Schloßkette 41 übertragen wird. Dadurch wird das vorderste Schloß 34 sicher in die Schloßhalterung 33 gedrückt, wobei die Position des Schlittens 51 durch die Länge der zwischen dem vordersten Schloß 34 und der Sperrklinke 70 befindlichen Schlösser bestimmt wird, an denen sich der Schlitten unter der Federkraft 63 abstützt. Da diese vor dem Schlitten 51 befindliche Schloßreihe aus vereinzelten Schlössern besteht, deren Abstand nicht unbedingt übereinstimmt mit ihrem Abstand vor der Vereinzelung, ist die Position des Schlittens 51 in diesem Zustand zufälligen Schwankungen innerhalb eines gewissen Toleranzrahmens unterworfen. Dies ist der Grund, warum die Schneideinrichtung 73 gemeinsam mit der Klinke 70 an dem Schlitten 51 angeordnet ist.

Während des Arbeitszyklus des Werkzeugs dreht sich die Nockenscheibe 59 kontinuierlich in Pfeilrichtung. Wenn der Bindevorgang abgeschlossen ist, erreicht ein Nocken 58 das untere Ende des Nockenhebels 74 und verschwenkt diesen gemäß Fig. 6, wodurch das letzte im Schlitten befindliche Schloß von der übrigen Schloßreihe abgetrennt wird. Wenn der Nocken 58 den Nockenhebel 74 verlassen hat, schwenkt dieser zusammen mit der Wippe 71 unter der Federkraft 72 wieder in die Stellung gemäß Fig. 5 und 7 zurück.

Der Nocken 58 erreicht nun das Ende des Nockenhebels 57 und verschwenkt dadurch die Nockenanordnung im Uhrzeigersinn. Dadurch wird die Feder 63 gespannt und der Schlitten 51 um etwas mehr als eine Schloßabmessung nach hinten (rechts in Fig. 7) verschoben. Während dieses Rückhubs halten die Sperrklinken 78 (Fig. 8) die Schloßreihe fest. Die Klinke 70 (bzw. die Klinken 70a) gleiten dabei an einem Schloß entlang bis über dessen Rückfläche hinaus, die beim nächsten Vorschub erfaßt werden soll. Sobald der Nocken 58 das Ende des Nockenhebels 57 verlassen hat, bewegt sich der Schlitten 51 unter der Wirkung der Feder 63 in Vorschubrichtung. Dabei greift zunächst die Klinke 70 (bzw. die Klinken 70a) in die nächstgelegene Schloßlücke ein. Sobald der verbundene Gegenstand 36 mit dem vordersten Schloß 34 vom Werkzeug entfernt wurde und daher die Schloßhalterung leer ist, wird der Schlitten 51 zusammen mit der Schloßkette weiterbewegt, bis das nunmehr vorderste Schloß die Schloßhalterung 33 erreicht hat. Der Widerstand, den dieses Schloß in der Schloßhalterung vorfindet, wird über die weitere Schloßkette bis zur Sperrklinke 70 und dem Schlitten 51 übertragen und hält diesen fest. Dabei wirkt ständig die Kraft der Feder 63 bzw. die Vorschubkraft des Schlittens 51 auf die vor dem Schlitten befindliche Schloßkette.

Da das Schloß vor der Klinke 70 noch einstückig mit der folgenden Kette von Schlössern verbunden ist, wird auch diese entsprechend nachgezogen.

Die Erfindung hat den Vorteil, daß der Trennschnitt zwischen aufeinanderfolgenden Schlössern an sehr genau definierter Stelle erfolgen kann und demzufolge die Länge des Stegs 10, der aufeinanderfolgende Schlösser verbindet, sehr gering bemessen werden kann. Die an den Schlössern verbleibenden Reste sind so kurz, daß sie keine Verletzungsgefahr verursachen. Sie brauchen nicht beseitigt zu werden. Für diese Vereinzelung der Schlösser genügt daher ein abfallfreier Schnitt. Auch besteht ein Vorteil der Erfindung darin, daß die Vereinzelung der Schlösser in beträchtlicher, beliebiger Entfernung von der Werkzeugstirn stattfinden kann, wo die Unterbringung einer Schneideinrichtung für die Schlösser auf Platzschwierigkeiten stößt.

## Patentansprüche

1. Gegenstand, insbesondere Kabelbaum, der mittels eines Bandes (18) gebunden ist, dessen Enden von einem Schloß (1) gehalten sind, das an zwei gegenüberliegenden Seiten (2) benachbart der Bandeintrittsseite (7) des Schlosses (1) die abgeschnittenen Reste (17) eines Stegs (10) aufweisen, der in einem Schloß-Magazinstreifen (41) benachbarte Schlösser (1) miteinander verbindet, **dadurch gekennzeichnet, daß** jeder Stegrest (17) eine Länge von nicht mehr als 0,6 mm und/oder als ein Zwölftel der in derselben Richtung gemessenen Richtung gemessenen Abmessung des Schlosses (1) und eine Breite von nicht mehr als der Hälfte der Schloßbreite aufweist.

2. Gegenstand nach Anspruch 1, **dadurch gekennzeichnet, daß** die Breite des Stegrests (17) geringer als die Breite des Bandes (18) ist.

3. Magazinstreifen von durch Stege (10) miteinander verbundenen Bandschlössern (1), die zum Halten der Enden von Bändern zum Binden von langgestreckten Gegenständen (19) wie Kabelbäumen gemäß Anspruch 1 oder 2 vorgesehen sind und zur Aufnahme dieser Enden wenigstens eine Bandöffnung (4) aufweisen, die auf einer Seite des Schlosses eine Bandeintrittsseite (7) aufweist, wobei die Stege (10) benachbart der Bandeintrittsseite (7) angeordnet sind, **dadurch gekennzeichnet, daß** die Stege (10) eine Länge von nicht mehr als 1 mm und/oder einem Achtel der Schloßabmessung in Streifenrichtung haben und ihre Breite nicht mehr als die Hälfte der Schloßbreite beträgt.

4. Magazinstreifen nach Anspruch 3, **dadurch gekennzeichnet, daß** die Stege (10) an einem Wulst (13) angeordnet sind, der von jedem Schloß in Richtung zum benachbarten Schloß vorragt.

5. Magazinstreifen nach Anspruch 3 oder 4, **dadurch gekennzeichnet, daß** die im wesentlichen parallelen Flächenanteile (2) der Schlösser, zwischen denen der Steg (10) angeordnet ist, schmaler als die Schlösser sind und seitlich davon Schrägflächen (3) angeordnet sind, die zu den parallel zur Streifenrichtung verlaufenden Flächenanteilen (1) führen.

6. Magazinstreifen nach einem der Ansprüche 1 bis 5, **dadurch gekennzeichnet, daß** benachbarte Schlösser und der sie verbindende Steg (10) einstückig ausgebildet sind.

7. Magazinstreifen nach einem der Ansprüche 1 bis 5, **dadurch gekennzeichnet, daß** ein zwei benachbarte Schlösser verbindender Steg (10a) mit einem der beiden Schlösser einstückig und dem anderen formschlüssig verbunden ist.

8. Magazinstreifen nach Anspruch 7, **dadurch gekennzeichnet, daß** der Steg (10a) eine Endverdickung (11) aufweist, die von dem Material (12) eines Schlosses aus dem heißplastischen Zustand heraus umschlossen ist.

9. Werkzeug zum Binden von Gegenständen, insbesondere Kabelbäumen, mittels eine Bandes (37), dessen Enden von einem Schloß (34) zu halten sind, das Teil eines Magazinstreifens nach einem der Ansprüche 3 bis 8 ist, wobei das Werkzeug eine Einrichtung (73) zum Trennen der Schlösser (1) voneinander aufweist, **dadurch gekennzeichnet, daß** die Trenneinrichtung (73) an einem in Vorschubrichtung (52) der Schlösser (1) beweglichen Trägerteil (51) angeordnet ist, der außerdem eine Positioniereinrichtung (70) für den Magazinstreifen (41) trägt.

10. Werkzeug nach Anspruch 9, **dadurch gekennzeichnet, daß** die Positioniereinrichtung (70) von mindestens einem Mitnehmer (70a) gebildet und der Trägerteil (51) zum Vorschub des Magazinstreifens (41) angetrieben ist.
